# EUROPEAN PATENT SPECIFICATION

(11) **EP 4 505 222 B1**
(45) Date of publication and mention of the grant of the patent: **15.04.2026**
(21) Application number: 23722099.1
(22) Date of filing: 30.03.2023
(51) Int. Cl.: G01V 1/18, G01V 1/38

(54) **A SEISMIC NODE AND A METHOD FOR PRODUCING A SEISMIC NODE**
SEISMISCHER KNOTEN UND VERFAHREN ZUR HERSTELLUNG EINES SEISMISCHEN KNOTENS
NOEUD SISMIQUE ET PROCÉDÉ DE PRODUCTION D'UN NOEUD SISMIQUE

(30) Priority: 01.04.2022 NO 20220403
(43) Date of publication of application: 12.02.2025
(73) Proprietor: Reflection Marine Norge AS, 5160 Laksevåg (NO)
(72) Inventor: MOSTUE, Terje Leslie, 1388 Borgen (NO); MATROSOV, Alexander, 1390 Vollen (NO); HERØ, Gunnar, 1339 Vøyenenga (NO); BROKSTAD, Erik Heggem, 3090 Hof (NO); GEURTS, Lucas Martinus Joseph, 0575 Oslo (NO); HUSOM, Vidar Anders, 1385 Asker (NO)
(74) Representative: Acapo Onsagers AS
(86) International application number: PCT/NO2023/050071
(87) International publication number: WO 2023/191639

(56) References cited:
- US-A1- 2014 211 589
- US-A1- 2016 349 386
- US-A1- 2017 017 003

## Description

The present invention relates to a seismic node, and in particular to a seabed node suitable for use in a marine seismic survey and having a compact profile. The present invention also relates to a method for producing a seismic node.

Seismic surveying techniques are a crucial tool for studying the structure of the earth's subsurface. The information obtained from such surveys is of wide scientific interest and can be used to study the make-up and history of the earth, as well as for locating and accessing underground reservoirs of hydrocarbon-based fossil fuels. Seismic surveys use acoustic sources, such as air guns or marine vibrators in the case of marine seismic surveys, which are configured to emit acoustic energy at selected frequencies to then propagate through the earth's surface and subsurface. The acoustic waves are reflected at boundaries between different materials within the subsurface structure, or are refracted, and travel back towards sensors located close to the surface. The sensors convert the received acoustic signal into an electric signal which is sent to a processor for analysis. The collected signals carry with them information about the materials either side of the different boundaries, and the positions of the boundaries themselves.

in order to survey the sub-surface structure, sensors are generally located either within one or more streamers which are towed behind a marine survey vessel, or are positioned at particular locations on the earth's surface (such as on the seabed), and may be located within nodes or along cables. The invention described herein finds particular utility when used as a seabed node, but can also be used as a land-based node or even as a node or device within a streamer cable or seabed cable if desired.

The seismic sensors themselves can include one or more of a number of different types of device capable of detecting a seismic wave within the surrounding material (air, water, or the material of the node itself). These can include pressure sensors such as hydrophones and motion sensors such as geophones or accelerometers (for example MEMS accelerometers). Nodes can also include additional sensors for measuring a node position, orientation, temperature, for location of the node, and for monitoring of other parameters.

Seabed nodes can be connected together via cables or ropes, which can assist with deployment and placement of the nodes on the seafloor, with retrieval, or in some cases to send signals to the nodes and receive data from the nodes during use. The nodes may be autonomous, meaning that they function to record seismic data when on the seafloor without any external control signal being required. In such a case there need be no data connection to the nodes during a survey. The nodes are simply switched on, left on the seafloor in the desired configuration (via their attachment to ropes or cables, using an ROV, or by other means), for subsequent collection. The data which has been recorded by the node can then be retrieved once the node is back onboard the seismic vessel.

To be suitable for use as a marine seismic node, which is to be located on the seabed possibly several kilometers below the surface, the housing of the node must be able to withstand the high pressures present on the seafloor as well as protecting the internal electrical components from exposure to water. This is traditionally achieved by way of an outer housing which is both sealed to prevent water entering the internal cavity and pressure resistant to prevent damage to internal components. Commonly, therefore, the node comprises one or more waterproof housings containing the seismic sensors, power supply, control means, clocks, and other sensors for orientation and positioning, formed as a fairly thick metal shell. A seabed node of this type is described in EP1805533B1. Here, a disc-shaped housing both protects the internal components from the external pressure environment and seals the node against water ingress.

US-A-14/821471 describes a seabed node having an internal pressurized and waterproof housing formed preferably of cast titanium. Partially surrounding this housing there is provided an outer structure which is not waterproof. Components such as the hydrophone are exposed to water, and are not covered by this external structure. The internal pressurized housing can be dissembled into two or more pieces (i.e. a lid and tray) to access the internal components. The outer structure, which can be formed of rubber, metal, carbon fiber, or plastic, covers only part of the node and acts as a bumper, providing additional protection against shocks as well as allowing attachment of the node to a wire for deployment and handling, and for efficient stacking of the nodes. US 2016349386 discloses a similar seismic node, comprising an inner pressurised housing and an outer protective envelope or housing. The inner pressurised housing is not completely enclosed by the protective envelope.

The requirement that the node housing be both pressure resistant and sealing places some restrictions on the type of materials that can be used, as well as the minimum weight and size of the nodes. Clearly, the efficiency and cost of handling is highly dependent on these factors, and a reduction in both size and weight as well as improvements in function are desirable.

According to a first aspect of the present invention, there is provided a seismic node, comprising: at least one seismic sensor; a pressure resistant structure having a first wall, a second wall, and one or more supporting elements extending between the first and second walls to define one or more cavities for containing pressure sensitive components; and a separate waterproof sealing skin surrounding the pressure resistant structure and the at least one seismic sensor.

The waterproof sealing skin shields the pressure resistant inner structure and the at least one seismic sensor from water (i.e. sea water when the node is deployed on the seafloor).

One or more of the walls can be integrally formed with the supporting elements of inner structure. The walls are not therefore necessarily removable from the rest of the structure and can represent outer surfaces thereof. Typically, at least a part of one of the walls of the inner structure (which may comprise all or part of the first wall, second wall, a side wall, or a front or back wall) will be removable in order to access the one or more cavities and the pressure sensitive components therein. The node will usually be cuboid or cylindrical (i.e. disk-shaped), so that the first and second walls are rectangular, square, or circular, however any shape can be used for the node. A spherical node may include two domed wall sections joined by supporting elements. A spherical node could include a removable wall section, or could include detachable hemispherical portions to allow access to the one or more cavities.

Pressure sensitive components represent parts which need to be protected from the external pressures experienced on the seafloor in order that these parts are not damaged and can continue to function. The pressure resistant structure may comprise an enclosure for containing the pressure resistant components. The enclosure may completely surround the pressure resistant components.

The sealing skin is a cover which contains and surrounds the inner structure and other node components. The inner structure and the seismic sensor together are surrounded by the skin. Both may be located within the same cavity or void formed by the outer skin, or the sensor may be fully or partially embedded within the sealing skin as described below. Either way, a layer of the sealing skin will completely surround the inner structure and the seismic sensor together, as well as other components supported within the one or more cavities.

The term "pressure resistant" as used herein refers to the fact that the inner structure is able to hold its shape without any external support at pressures typically experienced on the seabed during a survey. These may represent pressures above around 2 Bar and up to around 300 Bar (a depth of around 3 km) or even higher for surveys conducted at larger depths. The skin which surrounds the node is not pressure resistant in this way. It is therefore not able to hold its container-like shape without the support of the inner structure and, without this additional support, will collapse inwards at marine survey pressures. This does not mean that the material itself will degrade or be damaged at these pressures. A single sheet of the material (i.e. plastics material) used to form the surrounding skin will withstand seabed pressures without damage, however the whole skin, formed into a suitable shape to contain and surround the inner structure and components of the node, is not able to hold this shape on the seabed without the presence of the inner structure. The shape of the node in use is therefore defined by the shape of the outer extent of the inner structure. This means that while the pressure resistant structure ensures that the node holds its shape, and if hypothetically the inner structure were not present and the sealing skin were to be placed on the ocean floor, the container formed by the skin would not hold its shape and would be crushed or would collapse. The pressure resistant inner structure alone may not be waterproof, i.e. without the sealing skin being present, water could enter the cavities of the pressure resistant inner structure.

The sealing skin is generally thin and soft or flexible in comparison to the outer housing of a typical seismic node. The terms "waterproof" and "sealing" used in connection with the skin refer to the fact that the skin functions as a waterproof jacket or cover, and completely seals the node against water ingress. With the skin present water cannot pass from the outside of the node into the closed chamber(s) formed by the skin and containing the inner structure and the seismic sensor. These internal parts are therefore protected or shielded from water by the surrounding sealing skin.

The skin fully surrounds the internal pressure resistant structure and other components, and may represent a completely uninterrupted surface containing and enclosing these parts. The first and second walls may be referred to as bottom and top walls of the node respectively. These bottom and top walls can be larger than side, front, and rear walls (if present) and are therefore more suitable to be placed closest to the sea floor in use. In use, only the waterproof skin (and possibly some PCBs or other components) may be present between the bottom/top wall of the inner structure and the seabed. The supporting elements may comprise a central block with the cavities provided therein, and may be integral with the top and bottom walls, as mentioned above, so that the top and bottom walls represent an upper and lower outer surfaces of the central block. The supporting elements may include side walls and/or front and rear walls, some or all of which may also be integral with the central block so that they represent front, rear, and side surfaces of the inner structure. One or more of the walls, or part thereof, can instead be removable to allow access to one or more of the cavities of the inner structure.

Components such as hydrophones and antennas for wireless communication and/or charging can be mounted onto or located outward of the external surface of the inner structure, such as by being positioned within recesses on the external surface of the structure. The components can simply be placed on the surface to mount them, or can be affixed to the surface prior to application of the sealing skin in some cases. Here, they are protected from water damage by the sealing skin without this affecting the acoustic coupling or the transmission of a wireless or charging signal to the component. This is because the component is separated from the surrounding water only by the skin, which must be waterproof and sealing (i.e. must prevent water ingress), but which does not by itself enable the node to hold its shape. The sealing skin can therefore represent only a relatively thin waterproof cover or overmold, rather than a thicker metal casing, so that the hydrophone and antennas are able to operate when positioned within the compartment contained by the sealing skin. The same is true for other components that are mounted on or outward of the outer surface of the inner structure, but inward of the surrounding sealing skin (between the two). Some components, including the seismic sensor, may be embedded partly or completely within the skin, however they will still in such a case be surrounded by the sealing skin, with a further layer of the sealing skin material between them and the inner structure.

The pressure resistant structure is also protected by the sealing skin from corrosion due to exposure to salt water, which means that there is more choice in terms of which material is used for these underlying structural components of the node. The inner structure may be formed completely or partly from a metal or metal alloy, such as aluminium. The aluminium used to form the pressure resistant structure may or may not be corrosion resistant. Aluminium is lightweight and easy to shape, but in some forms can corrode easily and requires anodizing for use as a sealing housing of a node. Here, where the pressure resistant inner structure is not exposed to the external seawater, treatment of the aluminium or other metal to prevent corrosion, although possible, is not required.

Unlike previous node designs, the seismic node of the present invention includes two different, separate, components for providing the required pressure resistance and for waterproof sealing.

The node may comprise two or more modules of the type described above, which are separately sealed with a waterproof sealing skin. These modules may each include an inner pressure resistant structure formed of a first and second wall with one or more supporting elements extending therebetween. Different components of the node may be contained in different modules, which will be coupled together either by mechanical means or by wiring extending between the two. If wiring connects the two modules of the node, then seals may be provided around any entry points for the wires in order to maintain the waterproof nature of the outer skin. Mechanical connection means can be positioned outward of the sealing skin.

In embodiments, the sealing skin is molded over or onto the pressure resistant structure. The skin in this case will be bonded to the outer surface of the inner structure, and will conform to the shape of the structure and any components of the node mounted outwards of this. This can help to improve the function of external components, as described below. The sealing skin may be formed as a single integral piece (i.e. having no holes or joins), and in some cases as a single layer of polyurethane that is molded over and thereby bonded to the inner structure. This approach enables the production of a smaller, more compact node which can be manufactured at a lower cost. The frictional coupling or bonding between the sealing skin and the inner structure contributes to the transfer of seismic signals into the node.

In embodiments, the supporting elements comprise at least one additional wall and the walls of the pressure resistant inner structure form a substantially continuous outer surface for supporting the surrounding sealing skin. This outer surface comprises the outer surface of the first and second walls, as well as the outer surfaces of one or more side walls. If the node is cylindrical, one side wall may extend all of the way around the node to provide the continuous outer surface. If the node is cuboid, then two side walls, a rear, and a front wall may be present. When the sealing skin is being overmolded onto the inner structure, these walls prevent the molten material of the skin from seeping into the cavities of the inner structure. Small holes such as those used to fix any removable sections onto the rest of the inner structure may be present, but these will be small enough that the material of the sealing skin will not seep through them at the pressures and temperatures used for molding. There may be components positioned outward of the inner structure as mentioned above, in which case the outer surface of the inner structure will support these parts in some regions, which will in turn support sealing skin. The sealing skin may bond to these parts and to the inner structure across the rest of its outer surface.

In embodiments, the sealing skin is formed of a non-metal. In embodiments, the sealing skin is formed of a plastics material. Plastic is a cheap, light, flexible material which can be moulded at fairly low temperatures. A thin plastic skin does not interfere with the operation of components of the node. In embodiments, the plastics material is polyurethane. The sealing skin may be formed of epoxy, polyester, vinylester, or silicone. In embodiments, the sealing skin is formed of rubber.

In embodiments, the sealing skin comprises a single integral piece of material. This can be achieved for example by moulding the skin onto and over the underlying structure and ensures that there are no joins or holes in the skin which might result in unwanted leakages through the skin.

In embodiments, the pressure resistant structure is a metal structure or frame. In embodiments, the pressure resistant structure is an aluminium frame. The frame may be formed either partly or completely out of aluminium. Aluminium is light, easy to machine, and cheap. The frame can be treated (i.e. by anodizing) to improve corrosion resistance, but this may not be necessary since the inner structure is protected from water by the sealing skin.

In embodiments, the thickness of the sealing skin is between 2 mm and 10 mm. In embodiments, the thickness of the sealing skin at least in the areas of the skin which extend over the first wall and second wall, and preferably across the whole extent of the skin, is between 2 mm and 10 mm. The skin is therefore fairly thin, which can help with coupling and operation of the antennas and hydrophone.

In embodiments, the one or more cavities of the inner structure contain at least one data recorder, at least one power source, and at least one circuit board supporting a clock circuit.

In embodiments, the one or more seismic sensors comprise at least one hydrophone. This may be positioned on the exterior of the inner structure. In embodiments, the hydrophone is received within a cavity in the outer surface of the inner structure. The recess may be cylindrical, for example, which is a convenient shape for machining into the inner structure. The recess can, however, be any shape and will at least partially contain and provide a degree of protection to the hydrophone positioned therein.

In embodiments, the hydrophone is embedded, fully or partially, within the sealing skin. The hydrophone can be received on the pressure resistant inner structure or within the cavity of the inner structure so that it is exposed to the surrounding sealing skin. The hydrophone may be completely embedded within the surrounding sealing skin. The hydrophone is therefore protected from damage resulting from impact. At the same time its function is not hindered, due in part to the fact that there are no pockets of air or materials other than the sealing skin between the hydrophone and the seawater surrounding the node. The hydrophone can be positioned within the cavity prior to overmolding of the skin. This can be achieved using a spacer, a small piece of glue, or a small sample of the same material which will be used to form the skin. The skin is then overmolded over the inner structure and the hydrophone so that the hydrophone is suspended within the skin. The hydrophone does not therefore necessarily contact the inner structure and is not necessarily mounted directly onto the inner structure, but can still be contained within the cavity for protection.

In embodiments, the one or more seismic sensors comprise at least one pressure sensor and at least one motion sensor. The sensors may comprise one or more of at least one accelerometer and at least one geophone. Including additional seismic sensors, particularly if a hydrophone is present as one of the sensors, allows the seismic field to be properly characterized.

In embodiments, the seismic node comprises at least one antenna positioned between the outer surface of the inner structure and the sealing skin. The antenna, which may be configured for wireless communication or for charging of the node, can be positioned on an outer surface of the inner structure, such as on an outer surface of the first or second wall, or can be received within a recess in the pressure resistant structure, so that it faces and is generally in contact with the surrounding sealing skin. Again, the function of the antennas in terms of receiving wireless signals of the node is not hindered by the presence of the sealing skin covering them, but this skin does provide protection to the antennas and will protect them from water damage. Charging of the node can be achieved wirelessly using one or more of these antennas as a charging coil. The node does not therefore require any physical connection for charging or for data communication, which is a huge advantage over previous designs. Antennas present may include one or more of a Bluetooth antenna, an RFID antenna, a charging coil, and a GNSS antenna.

In embodiments, the seismic node comprises at least one antenna located behind a window in the outer surface of the pressure resistant inner structure. The window may be formed of a material which allows radiation to pass through the window to the antenna. The window may be formed of a material other than the metal from which the pressure resistant housing is formed in some cases.

In embodiments, the seismic node comprises a panel embedded within or positioned on the sealing skin for attachment of a handle to the node, and at least one antenna located behind a window in the panel. Attachment of the handle to the node is via the panel.

In embodiments, the node is a seabed seismic node. The node may be powered externally, or using an internal power source, or both.

According to a second aspect of the present invention, there is provided a method for producing a seismic node, comprising: providing a pressure resistant structure comprising a first wall, a second wall, and one or more supporting elements extending between the first and second walls to define one or more cavities therebetween for containing pressure sensitive components; positioning at least one seismic sensor relative to the structure; and applying a separate waterproof sealing skin to such that it contains and surrounds the pressure resistant structure and the seismic sensor. The waterproof sealing skin is configured to shield the pressure resistant inner structure and the at least one seismic sensor from water.

In embodiments, the method comprises applying the sealing skin over the structure by overmolding the skin onto the outer surface of the structure.

In embodiments, the method comprises positioning the one or more pressure sensitive components within the cavity of the inner structure prior to applying the sealing skin.

In an alternative implementation, not encompassed by the wording of the claims, there is provided a seismic node, comprising: at least one seismic sensor; a pressure resistant inner structure defining one or more cavities for containing pressure sensitive components; and a separate waterproof sealing skin overmolded onto the outer surface of the pressure resistant inner structure to surround the inner structure and the at least one seismic sensor. In embodiments, the skin may be formed of a plastics material, such as polyurethane. The overmolded skin may be bonded to and supported on an outer surface of the pressure resistant structure. The outer surface of the inner structure may represent a substantially continuous surface.

According to another alternative implementation, not encompassed by the wording of the claims, there is provided a seismic device comprising: a pressure resistant inner structure defining one or more cavities for containing pressure sensitive components; and a separate waterproof sealing skin overmolded onto an outer surface of the pressure resistant inner structure to surround the inner structure and the pressure sensitive components.

In embodiments, the device may be a seismic node. The node may comprise a seismic sensor and the sealing skin may be applied to surround both the seismic sensor, the inner pressure resistant structure, and the pressure sensitive components. The overmolded skin may be formed of a plastics material, such as polyurethane. The overmolded skin may be bonded to and supported on an outer surface of the pressure resistant structure. The outer surface of the inner structure may represent a substantially continuous surface.

According to another alternative implementation, not encompassed by the wording of the claims, there is provided a monitoring apparatus comprising: at least one sensor; a pressure resistant structure having a first wall, a second wall, and one or more supporting elements extending between the first and second walls to define one or more cavities for containing pressure sensitive components; and a separate waterproof sealing skin surrounding the pressure resistant structure and the at least one sensor.

The sealing skin may be an overmolded skin. The overmolded skin may be formed of a plastics material, such as polyurethane. The overmolded skin may be bonded to and supported on an outer surface of the pressure resistant structure. The outer surface of the inner structure may represent a substantially continuous surface.

Embodiments of the present invention will now be described, by way of example only, with reference to the following diagrams wherein:
Figure 1 illustrates a seabed node including a waterproof sealing skin;
Figure 2 shows the upper side of the node of figure 1, with cut outs showing parts of the pressure resistant inner structure;
Figure 3 shows the overmold or sealing skin with the pressure resistant inner structure and other components not shown;
Figure 4 illustrates the node of figures 1 and 2 in exploded view and without the sealing skin; and
Figure 5 illustrates a seabed node, including a waterproof sealing skin and a handle.

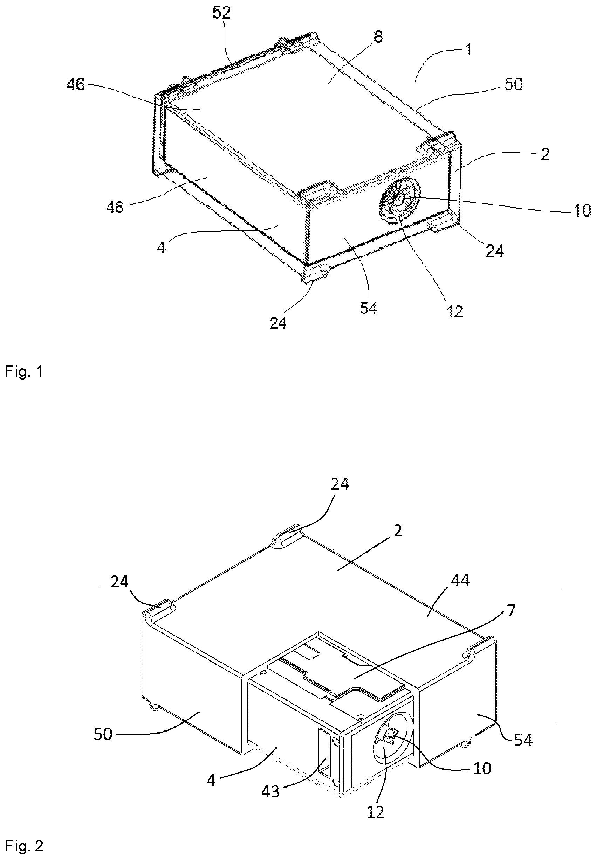

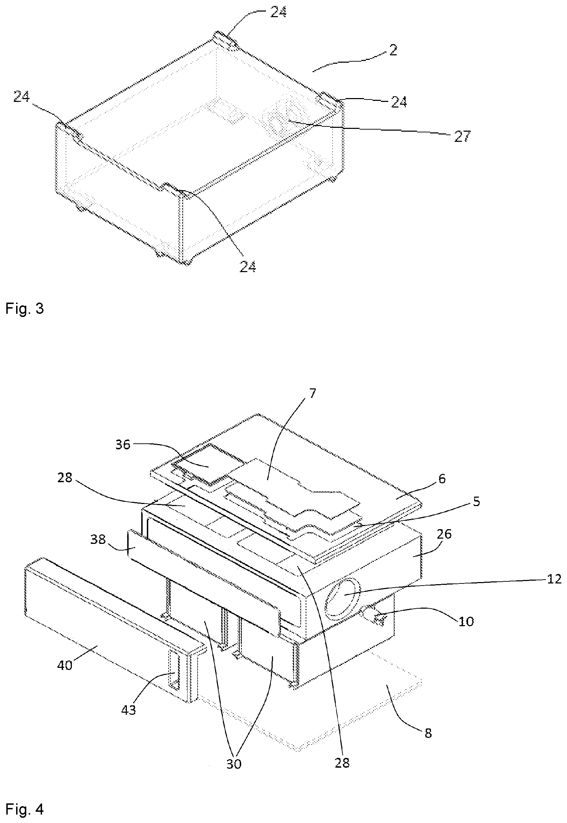

An example of a seabed node 1, including an outer sealing skin 2 surrounding a pressure resistant inner structure or frame 4, is shown in figure 1. The sealing skin is shown as partially removed in figure 2 in order to illustrate possible positions for some of the components mounted on the inner structure. The inner structure includes a number of cavities, recesses, or mounting points by which the various components are fitted into or placed on the structure. Recesses may represent indented regions in the outer surface of the inner structure, such as in the upper wall, which are sized and shaped to correspond to a component. Recess 5 (shown in figure 4) is present on the upper wall of the inner structure, for example, for receiving a correspondingly shaped PCB 7 (shown in figures 2 and 4) including electronics related to wireless communication with the node and charging of the node. The component can be positioned within the recess to mount it, which will help to keep the component in place, at least during application of the outer sealing skin. The recess can provide space for more delicate electronic components which need to be protected to a greater extent from the seabed pressures to which the outward facing surface of the PCB 7 is exposed. Components, such as the PCB, may protrude above the outer surface of the inner structure, or may be completely contained within it. Mounting points may include coupling means by which components can be attached to the inner structure, with or without a corresponding recess.

The inner structure itself can be formed of a number of separate pieces, as shown in figure 4, which are coupled together in any suitable way using fastening means, such as by bolting, locking, screwing, or clipping. The inner structure includes at least an upper wall 6 and a lower wall 8, each of which extend across most, if not all or substantially all, of each of the upper surface and lower surface of the inner structure. These walls can be removable from the rest of the inner structure as shown, or can be integral with the rest of the inner structure. The walls will usually then extend from side to side and front to back of the inner structure, but may include holes, recesses, cut-out portions, and the like, which allow for assembly of the inner structure and for parts to be mounted above or below the walls. Aside from these attachment points or cut-outs, which may be present in some cases, the panels extend across and form substantially the whole upper and lower surface of the inner structure, and thus provide a surface over which the thin sealing skin 2 can be supported. As mentioned, the sealing skin may be applied over the inner structure by a process of overmolding.

This overmolding can be achieved by pouring a fluid mixture, for example a fluid plastics mixture which may be based on a polyurethane mix, into a casting mold which contains the completed inner pressure resistant assembly of figure 4, and the components mounted thereon. The fluid mixture will harden into a skin bonded to the inner structure and any components on the outside of this structure, thereby providing the sealing skin. After hardening of the skin is complete, the casting mold is removed and the sealed node is obtained. This process can be repeated for subsequent nodes, reusing the same casting mold.

The node may be box-shaped, and may have a width and depth that are both larger than the height of the node, providing a fairly low profile and a relatively larger bottom/top surface for coupling to the seabed. The node is usable with either of the largest surfaces (top and bottom surface) facing downwards. This is another advantage of this particular design. The seismic sensor (e.g. a hydrophone), and optionally any lights or signal sources to be used for location of the node, can be located on a side surface so that the functionality is the same with either of the largest surfaces of the node facing downwards towards the seabed in use. In embodiments, the hydrophone or sensor is located on one of the front, rear, or side surfaces of the node. In the example shown the hydrophone is located within a cavity in the rear surface of the inner structure of the node. Generally, one of the larger top or bottom surfaces will be the location for the charging coil and communications electronics (see below), and this will generally be referred to as the "top surface" of the node, even if the node is still able to function with this surface facing downwards towards the seabed. In the examples shown in the figures, the node 1 includes a large rectangular top surface 44 and bottom surface 46, and smaller left 48, right 50, front 52, and rear 54 surfaces together forming the box-shape. The inner structure 4 defines the shape and extent of the node, and is thus also box-shaped, although it may be provided with various recesses, cavities, or openings as explained above. The inner structure forms a generally box-shaped housing over which the waterproof sealing skin 2 is provided.

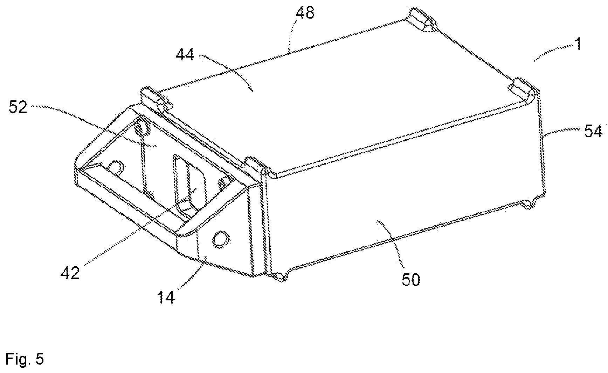

The front surface 52 of the node shown in the figures is the surface on which the handle or coupling means 14 (shown in figure 5) is provided, and the rear surface 54 is the surface in or behind which the cavity 12 for the hydrophone 10 is provided. Obviously, the shape and configuration of the node can be adapted, and different components provided on different surfaces, however the rectangular box shape provides a particularly compact configuration for the node as a whole and a relatively large surface for contacting the seafloor in use. The handle 14 is shown located on the front surface 52 of the node and the hydrophone 10 on or behind the rear surface 54, however these can equally be located on another surface of the node if desired.

The sealing skin itself is generally not strong enough to withstand the pressures at survey depths, and so the inner structure is required to define the shape of the node, as mentioned. The presence of the upper and lower walls, helped by the fact that largely uninterrupted left, right, front, and rear surfaces are generally also provided by the inner structure once assembled, mean that the pressure resistant structure defines a solid shape on which a sealing skin can be supported, and onto which it can be overmolded without seeping through to the internal cavities and the delicate components therein. In the examples shown, the shape is a rectangular cuboid, which is convenient for stacking and handling of the nodes, as well as helping to ensure efficient coupling to the sea floor. The nodes can, however, be manufactured to have another overall shape if desired, such as a square, hexagonal, disc-shaped, spherical, triangular, conical, cylindrical, and so on. Whatever the overall shape of the node, the inner pressure resistant structure is manufactured in one or more pieces which can be fitted together to provide a substantially continuous outer surface over which a sealing skin can be applied, and to form a number of cavities, recesses, and/or mounting points which allow components of the node to be supported within or coupled to the inner structure.

The sealing skin is preferably applied to the inner structure via a process of overmolding, which involves the application of resinous material in one or more layers to the outer surface of the inner structure. This material is then allowed to harden to form the skin. The skin can be formed by overmolding without holes or joins, which could represent areas where water might be more likely to leak through the skin. The material from which the sealing skin is formed may be polyurethane or a similar plastics material. Overmolding of the outer skin onto the inner structure may be carried out with the material to be applied at around room temperature, which helps to prevent damage of the electronic components and connection points within and coupled to the inner structure. A degree of pre-heating can be used to assist with the application of the skin, provided that electronics are separated from contact with the coating by parts of the inner structure or are resistant to damage at the temperatures concerned.

For example, injection molding, which is a specific method of overmolding, can be used to apply the outer sealing skin. If injection molding is used, the outer shell is applied in a molten, liquid, or semi-liquid form to the outer surface of the pressure resistant inner structure using an external mould which defines the shape of the sealing skin. Once the material of the skin is introduced into the mold, it can be allowed to harden so that it takes the shape of the mold and bonds to the outer surface of the inner structure. The mold is then removed. Other methods for applying the sealing skin are also conceivable. The skin may, for example, be separately molded as two or more sections which can joined together at sealed interfaces to cover the structure. This will, however, introduce weak points which can make the skin more vulnerable to leakages.

The sealing skin may represent a continuous, uninterrupted cover which is formed as a single piece of material completely surrounding the inner structure. There may be no holes, joins, or openings within the skin through which water could potentially leak through to the inner structure, and the skin can represent the outermost surface of the node across its whole extent. In some cases, however, additional components, such as handle 14, can be coupled to the node so as to be positioned adjacent the outer surface of the skin. These components may be coupled via screws or other attachment means extending part of the way through the skin in some cases. In the examples illustrated in the figures, the handle is attached by way of a panel (i.e. a metal panel) which is embedded within the sealing skin. The panel can be positioned relative to and slightly spaced apart from the inner structure prior to or during application of the sealing skin onto the node. The panel can be held in place during the molding process by a small piece of glue or a temporary fixing, or a piece of the material to be used to form the sealing skin as for the hydrophone. Alternatively, a layer of sealing skin can be applied over the inner structure, the panel placed over this, and then the rest of the sealing skin 2 applied over the panel. Bolts or other attachment means for the handle may be pre-attached to the panel and may extend outwards of the sealing skin for easy attachment of the handle. Because there is a layer of the sealing skin between the panel and the inner structure 4, the inner structure is still protected from water ingress. Even if water is able to leak into the openings through which the bolts/attachment means extend, this will not be able proceed to the inner structure 4 and the node components supported thereon, but will be prevented from doing so by the sealing skin in between.

The panel for supporting the handle and the handle itself if applicable may include a window 42 (shown in figure 5) to reveal the sealing skin below. This can be used to allow an antenna positioned on the outer surface of the node inner structure, and behind the panel, to receive and/or send signals. Positioning the handle 14 and one or more antennas on the same surface of the node is beneficial in terms of transmitting signals for syncing of the node during retrieval. The node will hang downwards from the handle as it is pulled up through the water with its front surface 52 facing upwards. Locating an antenna on the front wall of the inner structure therefore allows for effective transmission of signals to and/or from the node via this antenna. The antenna may be used to receive signals used to sync the clock of the node.

The skin will also completely surround and shield from the environment all components supported directly within or on the inner structure. The fact that the material of the pressure resistant portions of the node is protected from water by the outer sealing skin means that there is more flexibility in terms of which material is used to form this part. Aluminium or an aluminium alloy can be used for this purpose and is easy to machine, cheap, and lightweight. The aluminium may or may not be treated (such as by anodising) to reduce the possibility of corrosion and wear.

Figure 3 illustrates one possible shape for the sealing skin 2 if the configuration of the inner structure and the placement of the node components is as shown in the other figures. The sealing skin alone is not able to hold its box-like shape at pressures within the range expected at survey depths, and the container formed by the skin will collapse inwards at these pressures without the internal support provided by the pressure resistant inner structure. The skin fits within and conforms to the shape of the cavity 12 for receiving the hydrophone (forming shaped portion of the skin 27). The charging antenna/coil and some communications electronics are positioned on an outer surface of the inner structure in use.

All internal components are also protected from water damage and to an extent from contact damage by the sealing skin. This applies equally to the hydrophone or hydrophones of the node, which have traditionally been located externally to a pressure resistant and sealing metal housing and exposed to seawater. The reason for locating the hydrophones externally has been to allow them to detect pressure waves in the surrounding water, since this function would be severely hindered with the hydrophone located inside the metal pressure housing of a traditional node. The hydrophones and other external components of seabed nodes have therefore previously been susceptible to physical damage. The present invention employs an outer sealing skin which does not, and does not need to, provide any pressure resistance, and which can therefore be formed as a relatively soft/thin shell over the inner structure. The hydrophone can be positioned within a cavity of the inner structure so that it can detect pressure changes in the water, with only the material of the sealing skin between it and the surrounding environment. The hydrophone is in this way protected from damage, is not exposed to seawater, and can function to detect acoustic waves in the surroundings as effectively as the hydrophones of previous seabed node designs have been able to do.

The node shown in figures 1 to 4 includes cavity 12 within a central portion of the inner structure, designed for placement of the hydrophone 10 therein. If overmolding is used to apply the sealing skin 2, then the hydrophone and other components of the node will be placed within or on the inner structure 4 prior to application of the skin itself. This causes the skin to follow the shape of the cavity and the hydrophone itself as shown in the figures, ensuring the effective coupling and performance of the hydrophone. The hydrophone will generally be at least partially embedded within the skin once applied, which allows for effective acoustic coupling.

A handle or coupling mechanism 14 may be provided on the node 1 to assist with transport, handling, and storage of the nodes. In the examples shown in the figures this is provided on the outside of the sealing skin 2, and is coupled to a supporting panel which is embedded within the sealing skin. Coupling or attachment of the handle to the supporting panel can be by way of bolts which extend through an outer part of the sealing skin, but not all of the way through, as described above. Alternatively, the handle 14 can be coupled to the inner structure, or can form part of the inner structure, and the outer skin can be applied so as to also surround the handle. If this is the case, then the skin completely surrounds all components of the node.

Figure 5 shows one possible design for the handle 14, which is designed to assist with manual handling of the node or handling via ROV. A node of this type can be provided with more than one handle or coupling means, and these may be of different types. The handle can also be shaped for attachment to a deployment cable. Clearly the particular configuration of the handle shown is not limiting, and adaptions to the shape and positions of these components can be made depending on how the node is intended to be deployed and used.

The sealing skin 2 can include projections 24 on its outer surface, which are useful when stacking the nodes one on top of another for storage, particularly combined with the rectangular form of the nodes as defined by the inner structure, as well as potentially serving to enhance coupling to the seabed. In one preferred example, the top surface 44 of the node is provided with projections at each corner, and the bottom surface 46 with grooves (which may themselves be within additional protruding portions) at each corner for receiving the projections 24 of the upper surface of a similar node stacked below. Obviously, the grooves can equally be provided on the upper surface and the projections on the lower surface, or some projections and some grooves can be provided on each surface. Provided that these correspond and interlock for adjacent nodes, some support will be provided to the stacked devices. The node may also include grooves or patterning on its top and/or bottom surface to improve coupling of the node with the seabed and detection of acoustic radiation reflected by the subsurface structure.

As can be most clearly seen in the exploded view shown in figure 4, the inner structure can be formed of three main sections, namely an upper wall 6, a lower wall 8, and a central block 26, which either forms or can be fitted with side, front, and rear walls. The central block in this case includes two cavities 28 which house the battery packs 30 or power sources for the node. These battery packs may provide sufficient power to allow the node to function for a time, and may allow the node to function for around 120 days or more, without any external source of energy being provided. The battery packs themselves may each be formed as a solid metal block, preferably a metal (i.e aluminium or another metal) block, including openings in each of which a pack comprising a plurality of batteries is located. In the example shown, two such battery packs are included in the node and two corresponding cavities are provided in the central block 26, however one or more than two may be included in some embodiments. A connecting portion then provides for connection between the separate cells within each battery pack.

The central block 26 also includes a cavity 12 for receiving the hydrophone 10, in this case on a rear surface 54. The cavity may be cylindrical in shape as shown, or can be any other shape. One or more components, such as a PCB with wireless communication/charging electronics 7, are located in recesses on top of the upper wall along with a charging coil 36 which can be used to wirelessly charge the batteries of the battery packs. The main printed circuit board 38, including further electronics required for the node, is in this case positioned on the right side of the node, and is protected by a removable side wall 40 forming part of the inner structure. In some cases, there may be an additional circuit board extending across the left side of the node with an additional protective removable side wall. The main PCB 38 is then contained within a cavity in the inner structure which is substantially closed in use by fitting the side wall 40 to cover it. In some cases, the side wall may be integral with the central block and the circuit board can be inserted into a cavity behind the side wall which can then be closed by attachment of the top wall or by a cover integral with the circuit board itself.

The node 1 can include antennas on one or more surfaces. Antennas may be present, for example, on two or more sides of the node, and preferably on three or more sides of the node. These will be positioned external to the inner structure, and may be positioned within recesses in the inner structure. The antennas can be located behind windows through the inner structure in some cases. This is in order to allow electromagnetic signals, which can pass easily through the sealing skin but not the metal inner structure, to reach the antennas. The example shown in the figures includes antennas on two sides, including on the right side coupled to the main PCB 38 and behind the handle 14 at the front of the node. There may also be an antenna located on the separate PCB 7 on the upper wall.

As mentioned above, and as can be seen most clearly in figure 5, the panel supporting the handle and the handle itself 14, may include a window 42, within which an antenna is located. On the right side 50 of the node is an additional window 43 (shown in figures 2 and 4), which may also provide an opening behind which an antenna is located. A beacon may also be located behind one of the windows 42 or 43 or a separate window in the outer surface of the inner structure (i.e. in left, right, front, rear, top, or bottom walls). This beacon can be a light, such as an LED or another illumination means, an acoustic transducer, or an electromagnetic source such as an electromagnetic coil. The beacon can be used to help with location of the node on the sea floor. Additional beacons, and/or additional windows may be provided in the node so that additional lights, sources, or antennas can be positioned around the node. In the figures, the second window 43 comprises an opening in the side wall 40 of the inner structure fitted with cover of a transparent material acting as a light guide and providing additional protection to the beacon. A similar transparent material or light guide can be provided in any of the other windows. Because the sealing skin is thin, beacon lights or sources located behind the windows are both protected from water and are visible through the skin. Where antennas are present, the material covering the windows can be of any material provided that signals can be sent from the antennas located behind (i.e. these window covers will not be formed of metal). In order to view a light behind a window it is preferable that cover is also transparent or semi-transparent to allow at least the majority of the light to pass through.

The inner structure may include any number of these windows, which allow lights or other signal sources to be detectible when the node is in use, or which provide access to the antennas of the node. These windows may be located anywhere on the inner structure, but in the example shown in the figures two windows are present and these are located in a side wall 40 and behind the handle as mentioned above. The windows can each comprise an additional covering portion (which will also help to prevent seeping of the skin into the internal part of the inner structure during molding), or may simply represent openings in the outer surface of the pressure resistant inner structure. The window on the front of the node may be located in the handle portion only, and the plate behind the handle if present, and the signaling light positioned on an outer surface of the inner structure.

Electromagnetic signals are able to pass easily through the skin and reach any antenna located on or external to the outer surface of the inner structure, but within the sealing skin. Locating the charging coil for the battery underneath the sealing skin but on or external to the outer surface of the inner structure, for example, allows for effective wireless charging of the node by induction. Generally, the thin sealing skin, whilst protecting components from water damage, does not impede the function of these components as previous metal node housings have necessarily done. This is an important feature of the node described herein which finds particular utility when it comes to protection and function of one or more of the wireless antennas for communication and/or charging, the beacon sources, and the hydrophone.

The main circuit board(s) 38 of the node may support at least control/micro controller chips (logistics) and other electronics required for the node. In the case that an optical beacon is included, and if the light source is not located at the surface of the node, then the node may also include an additional light guide to carry light from the beacon light to the window at the surface of the node inner structure in order that it be visible externally for use in locating the node by an ROV or the like.

The seismic sensors themselves may comprise one or more sensors measuring velocity, displacement, and/or acceleration. Geophones can be used for this purpose, but preferably at least one or some of the seismic sensors of the node will be accelerometers, such as MEMS accelerometers. Additional node sensors can include one or more of a heading sensor (such as a compass), a tilt sensor, and temperature sensors, as well as a static pressure sensor. These may be located within additional cavities or recesses formed in the central block of the inner structure.

As mentioned above, the node can include one or more of a charging coil 36 and one or more wireless antennas located externally to the supporting inner structure, but internally to the outer sealing skin. The nodes can be configured for wireless communication by mounting the required components on the outer surface of the pressure resistant inner structure. PCB 7 in the examples shown in the figures supports at least some of the wireless communication electronics required for the node. Functioning solutions for wireless communication with a seabed node, or for wireless charging of such a node, have not been presented as part of previous node designs because of the need for electrical components to be protected from water and the thick, metallic, sealing casings used to house these components. These metal casings prevent signals from reaching or being sent to and from the node, and prevent magnetic charging means from being employed to create a current within a charging coil.

The use of an pressure resistant inner structure and an outer sealing skin which is not pressure resistant and is not metallic, but instead fits around the inner structure to form a waterproof cover, means that components such as the wireless antennas and charging coils can be located very close to the outer surface of the node, without thick or metallic walls being present between them and the surrounding environment. Instead, only a relatively thin layer of a material such as plastic is present, and this will not prevent the transfer of signals/data to and from the node, viewing of beacon lights or receipt of beacon signals, or the charging of a coil by external means. Charging via the coil can comprise charging of a power source of the node, such as the batteries of one or more battery packs. The node is able to transfer and receive data, to be programmed, and to be charged without opening the node and without the requirement of an external connector. This is clearly extremely beneficial where a node designed to spend long periods on the seabed, since it reduces the likelihood of leaks and damage to internal components.

To produce the node, the pressure resistant inner structure 4 is first manufactured. This may be achieved by machining the various parts of the inner structure from a metal. Optionally, aluminium can be used for the inner structure since this is particularly light weight, cost effective, and easy to shape. The inner structure may be comprised of an upper wall 6, a lower wall 8, and a left and right wall (preferably comprising one or more covers, such as cover 40). One or more of these walls may include recesses for receiving electronics and other components or holes for attachment of the parts of the inner structure together using bolts or other attachment means. The inner structure can also include a central block 26 in which cavities to house larger components such as the power sources are provided. This central block will generally represent the heaviest part of the node housing, and will provide most of the pressure resistance required from the inner structure. As mentioned, one or more of the walls can be integral with the central block, so that they do not represent removable panels and cannot be separated from the central block. The components of the node are then placed in their allocated cavities or recesses, or are fixed to or placed on the inner structure in the desired locations before the outer skin is applied.

The step of applying the outer skin 2 may comprise applying the skin by a process of overmolding, which may involve application of a resinous substance to the outer surface of the inner structure (over the upper, lower, front, rear, right, and left walls where a rectangular shape is used for the node). This resinous substance is allowed to harden to form the sealing skin. The skin may be formed from a plastics material such as polyurethane, as mentioned above. Additional components, such as handles 14, can be fixed to the node external to the skin if desired, or can be integral to the sealing skin and shaped by the mold used to form the skin. The projections for stacking and coupling, for example, can be integral with the sealing skin and formed during the molding process.

The material used to form the outer skin, particularly where the node is to be used as a seabed node and the skin is to be applied by overmolding, should preferably be heat resistant, should provide good acoustic coupling, should be moldable at low temperatures, should be a low abrasion material, and should be fire resistant, UV resistant, etc. Plastics materials, such as polyurethane, are a good choice for the sealing housing.

In some cases, rather than a skin formed as a single part applied to the surface of the inner structure by molding, a sealing skin comprising more than one part can be used. The two or more sections of the skin can be joined together via a sealed connection, so that once it is assembled the skin is waterproof and prevents ingress of water to the internal components of the node. The skin, again, does not provide any pressure resistance or any real structural support to the node and can therefore be thin and formed of a material such as plastic. This compound skin will function in the same way as the overmolded skin described above in that it will provide a sealing function to protect the internal components from water ingress, but will not interfere with the performance of components such as hydrophones, charging coils, and wireless communication means. Again, the inner structure is required to define the shape of the node when the node is under pressure in use.

Although the node described herein is designed for use as a seismic node, and therefore includes a seismic sensor as the sensor, in an example not encompassed by the wording of the claims, the same principle can be used to produce another type of sensing node. In this example, therefore, the seismic sensor can be replaced with another sensor for monitoring a property of the surroundings of the node. This sensor can be contained with the pressure resistant housing within the sealing skin as described.

## Claims

1. A seismic node (1), comprising:
at least one seismic sensor;
a pressure resistant inner structure (4) comprising a first wall (6), a second wall (8), and one or more supporting elements extending between the walls to define one or more cavities for containing pressure sensitive components; and
a separate waterproof sealing skin (2) surrounding the pressure resistant inner structure and the at least one seismic sensor,
**characterised in that**
the waterproof sealing skin (2) is configured to shield the pressure resistant inner structure (4) and the at least one seismic sensor from water.

2. A seismic node (1) according to claim 1, wherein the sealing skin (2) is molded over the pressure resistant structure (4).

3. A seismic node (1) according to any of claims 1 and 2, wherein the supporting elements comprise at least one additional wall and the walls of the pressure resistant inner structure (4) together form a substantially continuous outer surface for supporting the surrounding sealing skin (2).

4. A seismic node according to any of claims 1 to 3, wherein the sealing skin (2) is formed of a plastics material.

5. A seismic node according to claim 4, wherein the plastics material is polyurethane.

6. A seismic node according to any of claims 1 to 5, wherein the sealing skin (2) comprises a single piece of material.

7. A seismic node according to any of claims 1 to 6, wherein the pressure resistant structure (4) is a metal frame.

8. A seismic node according to claim 7, wherein the pressure resistant structure (4) is an aluminium frame.

9. A seismic node according to any of claims 1 to 8, wherein the thickness of the sealing skin (2) is between 2 mm and 10 mm.

10. A seismic node according to any of claims 1 to 9, wherein the one or more seismic sensors comprises at least one hydrophone (10) received within a cavity (12) in the outer surface of the pressure resistant structure (4).

11. A seismic node according to claim 10, wherein the hydrophone (10) is embedded within the sealing skin (2).

12. A seismic node according to any of claims 1 to **11,** wherein the one or more seismic sensors comprises at least one motion sensor and at least one pressure sensor.

13. A seismic node according to any of claims 1 to 12, comprising at least one antenna positioned between the outer surface of the pressure resistant inner structure (4) and the sealing skin (2).

14. A seismic node according to any of claims 1 to 12, comprising at least one antenna located behind a window in the outer surface of the pressure resistant inner structure.

15. A seismic node according to any of claims 1 to 12, comprising a panel embedded within or positioned on the sealing skin for attachment of a handle to the node, and at least one antenna located behind a window in the panel.

16. A seismic node according to any of claims 1 to 15, wherein the seismic node (1) is a seabed seismic node.

17. A method for producing a seismic node (1), comprising:
providing a pressure resistant structure (4) comprising a first wall (6), a second wall (8), and one or more supporting elements extending between the first and second walls to define one or more cavities therebetween for containing pressure sensitive components;
positioning at least one seismic sensor relative to the structure; and
applying a separate waterproof sealing skin (2) to the node such that it contains and surrounds the pressure resistant structure and the seismic sensor sensor,
**characterised in that**
the waterproof sealing skin (2) is configured to shield the pressure resistant inner structure (4) and the at least one seismic sensor from water.

18. A method according to claim 17, comprising applying the sealing skin (2) over the pressure resistant structure (4) by overmolding the skin onto an outer surface thereof.

19. A method according to any of claims 17 and 18, comprising positioning one or more pressure sensitive components within the cavity of the pressure resistant structure (4) prior to application of the sealing skin (2).

## Patentansprüche

1. Seismischer Knoten (1), umfassend:
mindestens einen seismischen Sensor;
eine druckfeste Innenstruktur (4) umfassend eine erste Wand (6), eine zweite Wand (8) und ein oder mehrere Stützelemente, die sich zwischen den Wänden erstrecken, um einen oder mehrere Hohlräume zum Aufnehmen druckempfindlicher Komponenten zu definieren; und
eine separate wasserdichte Dichtungshaut (2), die die druckfeste Innenstruktur und den mindestens einen seismischen Sensor umgibt, **dadurch gekennzeichnet, dass**
die wasserdichte Dichtungshaut (2) dazu konfiguriert ist, die druckfeste Inneneinrichtung (4) und den mindestens einen seismischen Sensor vor Wasser zu schützen.

2. Seismischer Knoten (1) nach Anspruch 1, wobei die Dichtungshaut (2) über die druckfeste Struktur (4) gegossen ist.

3. Seismischer Knoten (1) nach einem der Ansprüche 1 und 2, wobei die Stützelemente mindestens eine zusätzliche Wand umfassen und die Wände der druckfesten Innenstruktur (4) zusammen eine im Wesentlichen durchgehende Außenfläche zum Stützen der umgebenden Dichtungshaut (2) bilden.

4. Seismischer Knoten nach einem der Ansprüche 1 bis 3, wobei die Dichtungshaut (2) aus einem Kunststoffmaterial gebildet ist.

5. Seismischer Knoten nach Anspruch 4, wobei das Kunststoffmaterial Polyurethan ist.

6. Seismischer Knoten nach einem der Ansprüche 1 bis 5, wobei die Dichtungshaut (2) ein einziges Materialstück umfasst.

7. Seismischer Knoten nach einem der Ansprüche 1 bis 6, wobei die druckfeste Struktur (4) ein Metallrahmen ist.

8. Seismischer Knoten nach Anspruch 7, wobei die druckfeste Struktur (4) ein Aluminiumrahmen ist.

9. Seismischer Knoten nach einem der Ansprüche 1 bis 8, wobei die Dicke der Dichtungshaut (2) zwischen 2 mm und 10 mm beträgt.

10. Seismischer Knoten nach einem der Ansprüche 1 bis 9, wobei der eine oder die mehreren seismischen Sensoren mindestens ein Hydrofon (10) umfassen, das in einem Hohlraum (12) in der Außenfläche der druckfesten Struktur (4) aufgenommen ist.

11. Seismischer Knoten nach Anspruch 10, wobei das Hydrofon (10) in die Dichtungshaut (2) eingebettet ist.

12. Seismischer Knoten nach einem der Ansprüche 1 bis 11, wobei der eine oder die mehreren seismischen Sensoren mindestens einen Bewegungssensor und mindestens einen Drucksensor umfassen.

13. Seismischer Knoten nach einem der Ansprüche 1 bis 12, umfassend mindestens eine Antenne, die zwischen der Außenfläche der druckfesten Innenstruktur (4) und der Dichtungshaut (2) positioniert ist.

14. Seismischer Knoten nach einem der Ansprüche 1 bis 12, umfassend mindestens eine Antenne, die hinter einem Fenster in der Außenfläche der druckfesten Innenstruktur angeordnet ist.

15. Seismischer Knoten nach einem der Ansprüche 1 bis 12, umfassend eine Platte, die zur Befestigung eines Griffs an dem Knoten in die Dichtungshaut eingebettet oder auf dieser positioniert ist, und mindestens eine Antenne, die hinter einem Fenster in der Platte angeordnet ist.

16. Seismischer Knoten nach einem der Ansprüche 1 bis 15, wobei der seismische Knoten (1) ein seismischer Meeresbodenknoten ist.

17. Verfahren zum Herstellen eines seismischen Knotens (1), umfassend:
Bereitstellen einer druckfesten Struktur (4), umfassend eine erste Wand (6), eine zweite Wand (8) und ein oder mehrere Stützelemente, die sich zwischen der ersten und der zweiten Wand erstrecken, um dazwischen einen oder mehrere Hohlräume zum Aufnehmen druckempfindlicher Komponenten zu definieren;
Positionieren mindestens eines seismischen Sensors relativ zu der Struktur; und
Aufbringen einer separaten wasserdichten Dichtungshaut (2) auf den Knoten, sodass sie die druckfeste Struktur und den seismischen Sensor enthält und umgibt, **dadurch gekennzeichnet, dass** die wasserdichte Dichtungshaut (2) dazu konfiguriert ist, die druckfeste Innenstruktur (4) und den mindestens einen seismischen Sensor vor Wasser zu schützen.

18. Verfahren nach Anspruch 17, umfassend das Aufbringen der Dichtungshaut (2) über die druckfeste Struktur (4) durch Umspritzen der Haut auf eine Außenfläche derselben.

19. Verfahren nach einem der Ansprüche 17 und 18, umfassend das Positionieren einer oder mehrerer druckempfindlicher Komponenten innerhalb des Hohlraums der druckfesten Struktur (4) vor dem Aufbringen der Dichtungshaut (2).

## Revendications

1. Nœud sismique (1), comprenant :
au moins un capteur sismique ;
une structure interne résistante à la pression (4) comprenant une première paroi (6), une seconde paroi (8) et un ou plusieurs éléments de support s'étendant entre les parois pour définir une ou plusieurs cavités destinées à contenir des composants sensibles à la pression ; et
une membrane d'étanchéité (2) imperméable à l'eau séparée entourant la structure interne résistante à la pression et l'au moins un capteur sismique, **caractérisé en ce que**
la membrane d'étanchéité (2) imperméable à l'eau est configurée pour protéger la structure interne résistante à la pression (4) et l'au moins un capteur sismique de l'eau.

2. Nœud sismique (1) selon la revendication 1, dans lequel la membrane d'étanchéité (2) est moulée sur la structure résistante à la pression (4).

3. Nœud sismique (1) selon l'une quelconque des revendications 1 et 2, dans lequel les éléments de support comprennent au moins une paroi supplémentaire et les parois de la structure interne résistante à la pression (4) forment ensemble une surface externe sensiblement continue pour supporter la membrane d'étanchéité (2) environnante.

4. Nœud sismique selon l'une quelconque des revendications 1 à 3, dans lequel la membrane d'étanchéité (2) est formée d'un matériau plastique.

5. Nœud sismique selon la revendication 4, dans lequel le matériau plastique est du polyuréthane.

6. Nœud sismique selon l'une quelconque des revendications 1 à 5, dans lequel la membrane d'étanchéité (2) est constituée d'une seule pièce de matériau.

7. Nœud sismique selon l'une quelconque des revendications 1 à 6, dans lequel la structure résistante à la pression (4) est un cadre métallique.

8. Nœud sismique selon la revendication 7, dans lequel la structure résistante à la pression (4) est un cadre en aluminium.

9. Nœud sismique selon l'une quelconque des revendications 1 à 8, dans lequel l'épaisseur de la membrane d'étanchéité (2) est comprise entre 2 mm et 10 mm.

10. Nœud sismique selon l'une quelconque des revendications 1 à 9, dans lequel les un ou plusieurs capteurs sismiques comprennent au moins un hydrophone (10) logé dans une cavité (12) de la surface externe de la structure résistante à la pression (4).

11. Nœud sismique selon la revendication 10, dans lequel l'hydrophone (10) est intégré dans la membrane d'étanchéité (2).

12. Nœud sismique selon l'une quelconque des revendications 1 à 11, dans lequel les un ou plusieurs capteurs sismiques comprennent au moins un capteur de mouvement et au moins un capteur de pression.

13. Nœud sismique selon l'une quelconque des revendications 1 à 12, comprenant au moins une antenne placée entre la surface externe de la structure interne résistante à la pression (4) et la membrane d'étanchéité (2).

14. Nœud sismique selon l'une quelconque des revendications 1 à 12, comprenant au moins une antenne située derrière une fenêtre dans la surface externe de la structure interne résistante à la pression.

15. Nœud sismique selon l'une quelconque des revendications 1 à 12, comprenant un panneau intégré dans la membrane d'étanchéité ou positionné sur celle-ci pour la fixation d'une poignée au nœud, et au moins une antenne située derrière une fenêtre du panneau.

16. Nœud sismique selon l'une quelconque des revendications 1 à 15, dans lequel le nœud sismique (1) est un nœud sismique de fond marin.

17. Procédé de production d'un nœud sismique (1), comprenant :
la fourniture d'une structure résistante à la pression (4) comprenant une première paroi (6), une seconde paroi (8) et un ou plusieurs éléments de support s'étendant entre la première et la seconde paroi pour définir une ou plusieurs cavités entre elles afin de contenir des composants sensibles à la pression ;
le positionnement d'au moins un capteur sismique par rapport à la structure ; et
l'application d'une membrane d'étanchéité (2) imperméable à l'eau séparée sur le nœud de manière à ce qu'elle contienne et entoure la structure résistante à la pression et le capteur sismique, **caractérisé en ce que** la membrane d'étanchéité (2) imperméable à l'eau est configurée pour protéger la structure interne résistante à la pression (4) et l'au moins un capteur sismique de l'eau.

18. Procédé selon la revendication 17, comprenant l'application de la membrane d'étanchéité (2) sur la structure résistante à la pression (4) par surmoulage de la membrane sur une surface externe de celle-ci.

19. Procédé selon l'une quelconque des revendications 17 et 18, comprenant le positionnement d'un ou plusieurs composants sensibles à la pression dans la cavité de la structure résistante à la pression (4) avant l'application de la membrane d'étanchéité (2).
